# EUROPÄISCHE PATENTSCHRIFT

(11) **EP 2 390 164 B1**
(45) Veröffentlichungstag und Bekanntmachung des Hinweises auf die Patenterteilung: **15.11.2017**
(21) Anmeldenummer: 11004284.3
(22) Anmeldetag: 25.05.2011
(51) Int. Cl.: B62D 21/03, B62D 25/20

(54) **Fahrzeugkarrosserieaufbau im Fersenblechbereich einer Insassenkabine**
Vehicle bodywork in a metal sheet heel area of a passenger cabin
Caisse de carrosserie de véhicule dans la zone talon d'une tôle de cabine passagers

(30) Priorität: 29.05.2010 DE 102010021994
(43) Veröffentlichungstag der Anmeldung: 30.11.2011
(73) Patentinhaber: Audi AG, 85045 Ingolstadt (DE)
(72) Erfinder: Maier, Hans-Peter, 85283 Wolnzach (DE); Schromm, Martin, 85080 Gaimersheim (DE); Thaysen, Oliver, 85055 Ingolstadt (DE); Oleff, Nils, 85049 Ingolstadt (DE)
(74) Vertreter: Engelhardt, Harald

(56) Entgegenhaltungen:
- EP-A1- 0 455 279
- EP-A1- 1 612 128
- WO-A2-01/72569
- DE-A1-102008 055 738
- JP-A- H10 203 423
- JP-A- S58 126 263
- JP-A- 2004 009 757

## Beschreibung

Die Erfindung betrifft einen Fahrzeugkarosserieaufbau im Fersenblechbereich einer Insassenkabine nach dem Oberbegriff des Anspruchs 1.

Ein allgemein bekannter gattungsgemäßer Fahrzeugkarosserieaufbau, wie in der EP 0 455 279 A1 beschrieben, enthält einen Mittentunnel und zu beiden Seiten jeweils einen dazu beabstandeten Seitenschweller, wodurch jeweils zusammen mit dem Bodenbereich ein Fußraum gebildet ist, der nach hinten durch ein vertikal und querverlaufendes Fersenblech begrenzt ist. Weiter ist es allgemein bekannt, im Bereich des Fersenblechs zur Aussteifung der Karosserie und insbesondere zur Abstützung und gegen Biegung einen Querträger anzuordnen.
Aufgabe der Erfindung ist es, eine gewichtsoptimierte Querträgeranordnung mit hoher Abstützfunktion im Fersenblechbereich vorzuschlagen.

Diese Aufgabe wird mit einem Fahrzeugkarosserieaufbau im Fersenblechbereich einer Insassenkabine wie in dem Anspruch 1 gelöst. Solche in der Hochrichtung getrennte Querträger ergeben eine deutlich bessere und gewichtsoptimierte Abstützung gegen Biegung im Vergleich zu einem Querträger. Insbesondere können dabei die Querschnitte und damit die Masse und das Gewicht solcher Querträger deutlich optimaler ausgeführt werden als bei einem einzigen Querträger. Durch den insgesamt geringeren Materialaufwand ergibt sich vergleichsweise auch eine Kostenreduzierung. Die Gewichtsreduzierung führt vorteilhaft zu einer entsprechenden Verbrauchsreduzierung.
In einer geeigneten konkreten Ausführungsform verläuft der obere Querträger zwischen beidseitigen Seitenschwellerbereichen unter Einbeziehung einer oberen Tunnelverstärkung als Tunnelbrücke durchgehend.

Der erfindungsgemäße Querträger ist zweigeteilt dergestalt, dass ein unterer linksseitiger Querträgerteil zwischen einem linksseitigen Seitenschwellerbereich und einem linksseitigen Mittentunnelbereich verläuft und entsprechend verläuft ein unterer rechtsseitiger Querträgerteil zwischen einem rechtsseitigen Seitenschwellerbereich und einem rechtsseitigen Mittentunnelbereich.
Eine besonders bevorzugte und vorteilhafte Weiterbildung wird dadurch erreicht, dass der untere linksseitige Querträgerteil mit einem linksseitigen vertikalen Verbindungsprofil und der untere rechtsseitige Querträgerteil mit einem rechtsseitigen vertikalen Verbindungsprofil jeweils mit den seitlichen Mittentunnelbereichen und dem oberen Querträger mit der Tunnelbrücke verbunden sind, wodurch ringförmige Strukturen geschaffen sind. Dazu ist jeweils zu beiden Seiten des Mittentunnels mit einem unteren Querträgerteil, einem zugeordneten vertikalen Verbindungsprofil und oberen Querträgerbereich sowie durch die Anbindung an einem Schwellerprofil eine Ringstruktur gebildet. Die beidseitig des Mittentunnels ausgebildeten Ringstrukturen sind über die Tunnelbrücke als Verstärkung miteinander verbunden.
Gerade diese Ringstrukturen führen zu einer hohen Versteifung und besonders gewichtsoptimierten Abstützung gegen Biegung, wobei die vertikalen Verbindungsprofile am Mittentunnel in Verbindung mit der Tunnelbrücke zu einer vorteilhaften Tunnelstabilisierung beitragen.

Die Profilquerschnitte der untere Querträgerteile, der Verbindungsprofile, des oberen Querträgers mit der Tunnelbrücke und der Schweller sollen aneinander angepasst und jeweils angebunden sein. Die Anbindung dieser Querschnitte in Verbindung mit der insgesamt ringförmigen Anbindung sorgt vorteilhaft für eine geschlossene Kraftübertragung und somit für eine Lösung mit hoher Funktion. In einer konkreten Ausbildung kann das Fersenblech zumindest teilweise als vordere Profilwand der Querträger vorteilhaft mitverwendet werden.

An das untere Querträgerprofil können gegebenenfalls mit einlaufenden Profilquerschnitten auch weitere Bodenlängsträger angeschlossen sein.

Anhand einer Zeichnung wird ein Ausführungsbeispiel der Erfindung näher erläutert.

Es zeigen:
- Fig. 1: eine Ansicht schräg von oben nach hinten auf einen Fersenblechbereich einer Insassenkabine eines Fahrzeugkarosserieaufbaus,
- Fig. 2: eine Ansicht von unten nach vorne auf die Rückseite des Fersenblechbereichs nach Fig. 1, und
- Fig. 3: einen perspektivischen Längsschnitt entlang der Linie A-A aus Fig. 1 einer modifizierten Ausführungsform des Fersenblechbereichs.

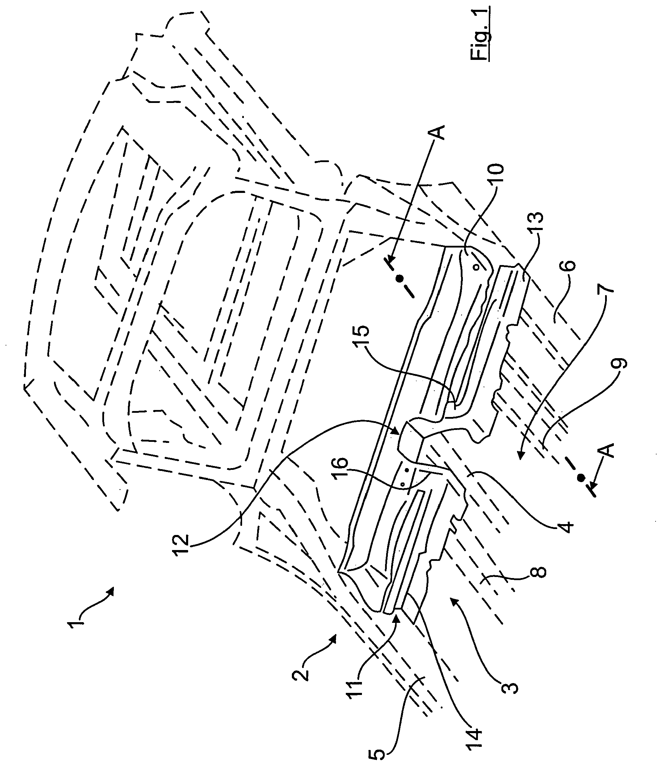

In Fig. 1 ist eine perspektivische Ansicht auf einen Teil einer Fahrzeugkarosserie 1 von vorne oben nach schräg hinten im Fersenblechbereich 2 mit einer dortigen Querträgeranordnung 3 gezeigt. Zur besseren Verdeutlichung sind die erfindungsgemäße Querträgeranordnung 3 mit durchgehenden Strichen und die anschließenden Karosserieteile strichliert gezeichnet.

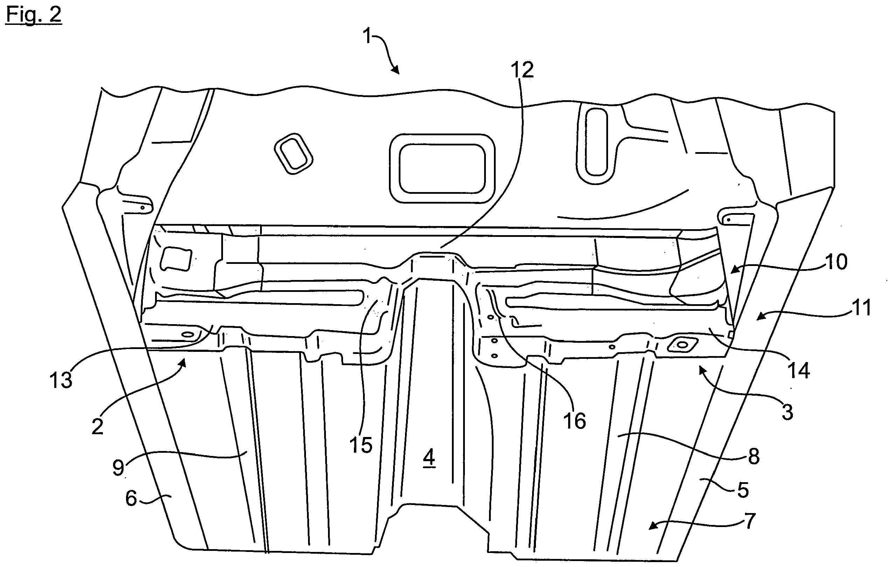

Der Karosserieaufbau umfasst einen Mittentunnel 4 und jeweils zu beiden Seiten einen dazu beabstandeten Seitenschweller 5, 6, wodurch jeweils zusammen mit dem Bodenbereich 7 beidseitig ein Fußraum gebildet ist, der nach hinten durch den Fersenblechbereich 2 mit seiner Querträgeranordnung 3 begrenzt ist. Auch die Ansicht nach Fig. 2 von schräg unten in Fahrtrichtung auf die Fahrzeugkarosserie 1 im Fersenblechbereich 2 zeigt die Querträgeranordnung 3 sowie den Mittentunnel 4 und die Seitenschweller 5, 6. Zudem sind hier beidseitig zwischen den Mittentunnel 4 und den Seitenschwellern 5, 6 jeweils im Bodenbereich 7 verlaufende Längsträger 8, 9 erkennbar, welche mit ihren hinteren Längsträgerprofilen in die Querträgeranordnung 3 einlaufen.

Mit Bezug auf die Fig. 1 und 2 ist die Querträgeranordnung 3 ersichtlich aus zwei höhenversetzten Querträgern, nämlich einem oberen Querträger 10 und einem unteren Querträger 11 gebildet.

Der obere Querträger 10 verläuft durchgehend zwischen den beidseitigen Seitenschwellerbereichen unter Einbeziehung einer oberen Tunnelbrücke 12, die den Mittentunnel 4 überbrückt und dadurch stabilisiert.

Der untere Querträger 11 ist zweigeteilt in einen unteren linksseitigen Querträgerteil 13 zwischen einem linksseitigen Seitenschwellerbereich und einem linksseitigen Mittentunnelbereich und in einen unteren rechtsseitigen Querträgerteil 14 zwischen einem rechtsseitigen Seitenschwellerbereich und einem rechtsseitigen Mittentunnelbereich.

Wie insbesondere auch aus Fig. 2 zu entnehmen ist, sind jeweils der untere linksseitige Querträgerteil 13 und der untere rechtsseitige Querträgerteil 14 mit einem linksseitigen vertikalen Verbindungsprofil 15 und entsprechend einem rechtsseitigen vertikalen Verbindungsprofil 16 mit den jeweils zugeordneten seitlichen Mittentunnelbereichen und dem oberen Querträger 10 bzw. der Tunnelbrücke 12 verbunden.

Dadurch ist ersichtlich zu beiden Seiten des Mittentunnels 4 jeweils mit einem unteren Querträgerteil 13, 14, einem zugeordneten vertikalen Verbindungsprofil 15, 16 und einem zugeordneten oberen Querträgerbereich sowie über die Anbindung an die Seitenschweller 5, 6 jeweils eine Ringstruktur gebildet, wobei die beidseitigen Ringstrukturen über die Tunnelbrücke 12 als Verstärkung verbunden sind. Die Profilquerschnitte an den Verbindungsstellen sind aneinander angepasst und laufen für eine geschlossene Kraftübertragung ineinander ein. Zudem dienen die jeweils seitlich am Mittentunnel 4 anschließenden Verbindungsprofile 15, 16 zur Tunnelstabilisierung und zusätzlichen Erhöhung der Biegesteifigkeit.

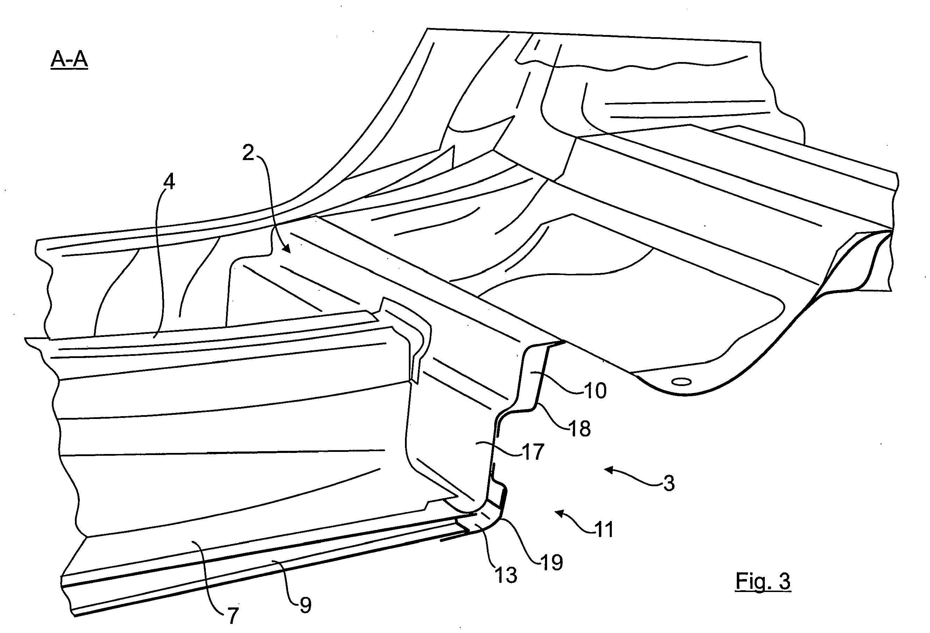

In der Schnittdarstellung der Fig. 3 entlang der Linie A-A aus Fig. 1 ist eine etwas modifizierte Querträgeranordnung 3 dargestellt, wobei auch hier der Mittentunnel 4, ein Bodenbereich 7 mit einem bodenseitigen Längsträger 9 und ein Fersenblechbereich 2 erkennbar sind.

Auch hier ist die Querträgeranordnung 3 im Fersenblechbereich 2 durch einen oberen Querträger 10 und einen zweigeteilten unteren Querträger 11, von dem der untere linksseitige Querträgerteil 13 geschnitten ist, erkennbar. Ersichtlich bildet hier ein Fersenblech 17 jeweils die vordere Profilwand des oberen Querträgers 10 und des unteren Querträgers 11. Anschließend an das Fersenblech 17 sind hier jeweils abgekantete Schließbleche 18, 19 am Fersenblech 17 zur Ausbildung der jeweiligen Querschnittprofile angesetzt.

Zudem ist hier ersichtlich, dass die bodenseitigen Längsträger 8, 9 mit ihren endseitigen Profilen in das jeweilige Querträgerprofil des linksseitigen und rechtsseitigen Querträgerteils 13, 14 einlaufen.

## Patentansprüche

1. Fahrzeugkarosserieaufbau im Fersenblechbereich einer Insassenkabine,
mit einem Mittentunnel (4) und zu beiden Seiten jeweils einem dazu beabstandeten Seitenschweller (5, 6), wodurch jeweils zusammen mit dem Bodenbereich (7) ein Fußraum gebildet ist, der nach hinten durch ein etwa vertikal und quer verlaufendes Fersenblech (2) begrenzt ist, wobei im Fersenblechbereich (2) zwei höhenversetzte Querträger (10, 11) angeordnet sind,
**dadurch gekennzeichnet,**
**dass** der untere Querträger (11) zweigeteilt ist dergestalt, dass ein unterer linksseitiger Querträgerteil (13) zwischen einem linksseitigen Seitenschwellerbereich und einem linksseitigen Mittentunnelbereich und ein unterer rechtsseitiger Querträgerteil (14) zwischen einem rechtsseitigen Seitenschwellerbereich und einem rechtsseitigen Mittentunnelbereich verläuft.

2. Fahrzeugkarosserieaufbau nach Anspruch 1, **dadurch gekennzeichnet, dass** der obere Querträger (10) durchgehend zwischen beidseitigen Seitenschwellerbereichen (5, 6) unter Einbeziehung einer oberen Tunnelverstärkung als Tunnelbrücke (12) verläuft.

3. Fahrzeugkarosserieaufbau nach Anspruch 1 oder 2, **dadurch gekennzeichnet, dass** der untere linksseitige Querträgerteil (13) mit einem linksseitigen vertikalen Verbindungsprofil (15) und der untere rechtsseitige Querträgerteil (14) mit einem rechtsseitigen vertikalen Verbindungsprofil (16) jeweils mit den seitlichen Mittentunnelbereichen und dem oberen Querträger (10) mit der Tunnelbrücke (12) verbunden sind dergestalt,
dass zu beiden Seiten des Mittentunnels (4) jeweils mit einem unteren Querträgerteil (13, 14), einem zugeordneten vertikalen Verbindungsprofil (15, 16) und oberen Querträgerbereich sowie die Anbindung an ein Schwellerprofil eine Ringstruktur gebildet ist, wobei die beidseitigen Ringstrukturen über die Tunnelbrücke (12) als Verstärkung verbunden sind.

4. Fahrzeugkarosserieaufbau nach Anspruch 3, **dadurch gekennzeichnet, dass** die Profilquerschnitte der unteren Querträgerteile (13, 14), der Verbindungsprofile (15, 16), des oberen Querträgers (10) mit der Tunnelbrücke (12) und der Schweller (5, 6) aneinander angepasst und für eine geschlossene Kraftübertragung angebunden sind.

5. Fahrzeugkarosserieaufbau nach einem der Ansprüche 1 bis 4, **dadurch gekennzeichnet, dass** das Fersenblech (2) zumindest teilweise als vordere Profilwand der Querträger (10, 11) mitverwendet ist.

6. Fahrzeugkarosserieaufbau nach einem der Ansprüche 1 bis 5, **dadurch gekennzeichnet, dass** beidseitig zwischen Mittentunnel (4) und Seitenschweller (5, 6) jeweils im Bodenbereich ein Längsträger (8, 9) verläuft, der mit seinem Längsträgerprofil in das Querträgerprofil des jeweils zugeordneten unteren Querträgerteils (13, 14) einläuft.

## Claims

1. Vehicle body structure in the heelboard region of a passenger cabin, having a centre tunnel (4) and a side sill (5, 6) distanced therefrom at each side whereby a foot area is formed together with the base region (7), said foot area is limited towards the rear by a roughly vertically and transversely running heelboard (2) wherein two height-adjusted transverse beams (10, 11) are arranged in the heelboard region (2),
**characterised in that**
the lower transverse beam (11) is divided in two such that a lower left transverse beam part (13) runs between a left side sill region and a left centre tunnel region and a lower right transverse beam part (14) runs between a right side sill region and a right centre tunnel region.

2. Vehicle body structure according to claim 1, **characterised in that** the upper transverse beam (10) runs continuously between both side sill regions (5, 6) while incorporating an upper tunnel reinforcement as a tunnel bridge (12).

3. Vehicle body structure according to claim 1 or 2, **characterised in that** the lower left transverse beam part (13) having a left vertical connection profile (15) and the lower right transverse beam part (14) having a right vertical connection profile (16) are respectively connected to the lateral centre tunnel regions and the upper transverse beam (10) with the tunnel bridge (12) such that a ring structure is formed at each side of the centre tunnel (4) with a lower transverse beam part (13, 14), an assigned vertical connection profile (15, 16) and upper transverse beam region as well as the connection to a sill profile, wherein the two-sided ring structures are connected via the tunnel bridge (12) as a reinforcement.

4. Vehicle body structure according to claim 3, **characterised in that** the profile cross-sections of the lower transverse beam parts (13, 14), the connection profiles (15, 16), the upper transverse beam (10) with the tunnel bridge (12) and the sills (5, 6) are adapted to each other and are connected for a closed force transfer.

5. Vehicle body structure according to any one of claims 1 to 4, **characterised in that** the heelboard (2) is also used at least partially as a front profiled wall of the transverse beams (10, 11).

6. Vehicle body structure according to any one of claims 1 to 5, **characterised in that** a longitudinal beam (8, 9) runs at both sides between the centre tunnel (4) and side sills (5, 6) in the base region, said longitudinal beam, with its longitudinal beam profile, runs into the transverse beam profile of the respectively assigned lower transverse beam part (13,14).

## Revendications

1. Caisse de carrosserie de véhicule dans la zone de tôle de talon d'une cabine de passagers, comprenant :
un tunnel central (4) et, sur les deux côtés, respectivement un seuil de porte latéral (5, 6) espacé de celui-ci, formant respectivement conjointement avec la zone de plancher (7) un espace de pied, qui est limité vers l'arrière par une tôle de talon (2) s'étendant à peu près verticalement et transversalement, dans laquelle deux traverses (10, 11) décalées en hauteur sont agencées dans la zone de tôle de talon (2),
**caractérisée en ce que :**
la traverse inférieure (11) est divisée en deux en sorte qu'une partie de traverse inférieure côté gauche (13) s'étende entre une zone de seuil de porte latéral côté gauche et une zone de tunnel central côté gauche et une partie de traverse inférieure côté droit (14) entre une zone de seuil de porte latéral côté droit et une zone de tunnel central côté droit.

2. Caisse de carrosserie de véhicule selon la revendication 1, **caractérisée en ce que** la traverse supérieure (10) s'étend de manière ininterrompue entre les zones de seuils de portes latéraux (5, 6) des deux côtés en association avec un renfort supérieur du tunnel sous la forme d'un pont-tunnel (12).

3. Caisse de carrosserie de véhicule selon la revendication 1 ou 2, **caractérisée en ce que** la partie de traverse inférieure côté gauche (13) avec un profilé de liaison vertical côté gauche (15) et la partie de traverse inférieure côté droit (14) avec un profilé de liaison vertical côté droit (16) sont respectivement reliées aux zones de tunnel central latérales et à la traverse supérieure (10) avec le pont-tunnel (12) en sorte que soit formée,
sur les deux côtés du tunnel central (4), une structure annulaire respectivement avec une partie de traverse inférieure (13, 14), un profilé de liaison vertical associé (15, 16) et une zone de traverse supérieure ainsi qu'avec le rattachement à un profilé de seuil de porte, dans laquelle les structures annulaires des deux côtés sont reliées via le pont-tunnel (12) comme renfort.

4. Caisse de carrosserie de véhicule selon la revendication 3, **caractérisée en ce que** les sections transversales des profilés des parties de traverse inférieure (13, 14), des profilés de liaison (15, 16), de la traverse supérieure (10) avec le pont-tunnel (12) et les seuils de porte (5, 6) sont adaptées les unes aux autres et sont rattachées pour assurer une transmission de force fermée.

5. Caisse de carrosserie de véhicule selon l'une quelconque des revendications 1 à 4, **caractérisée en ce que** la tôle de talon (2) est utilisée au moins en partie comme paroi profilée avant des traverses (10, 11).

6. Caisse de carrosserie de véhicule selon l'une quelconque des revendications 1 à 5, **caractérisée en ce que** s'étend des deux côtés entre le tunnel central (4) et les seuils de porte latéraux (5, 6) respectivement dans la zone de plancher un longeron (8, 9) qui s'ajuste avec son profil de longeron dans le profil de la partie de traverse inférieure (13, 14) respectivement affectée.
